# EUROPEAN PATENT SPECIFICATION

(11) **EP 3 353 484 B1**
(45) Date of publication and mention of the grant of the patent: **21.04.2021**
(21) Application number: 16849190.0
(22) Date of filing: 05.08.2016
(51) Int. Cl.: F28F 3/12, F28F 9/013, F28F 9/02, H01L 35/00, H01L 37/00

(54) **HEAT EXCHANGER**
WÄRMETAUSCHER
ÉCHANGEUR DE CHALEUR

(30) Priority: 25.09.2015 US 201514865786
(43) Date of publication of application: 01.08.2018
(73) Proprietor: Westinghouse Electric Company LLC, Cranberry Township, PA 16066 (US)
(72) Inventor: ARAFAT, Yasir, Pittsburgh, Pennsylvania 15202 (US)
(74) Representative: Gallo, Wolfgang
(86) International application number: PCT/US2016/045674
(87) International publication number: WO 2017/052798

(56) References cited:
- EP-A1- 2 476 986
- EP-A2- 2 636 982
- WO-A1-79/00766
- WO-A1-2010/096916
- WO-A1-2013/163398
- WO-A1-2014/181297
- WO-A2-2011/115883
- JP-U- H0 579 281
- KR-A- 20130 132 542
- US-A- 5 915 469
- US-A1- 2010 051 248
- US-A1- 2013 105 130
- US-B2- 7 159 650

## Description

### BACKGROUND

### 1. Field

The disclosed and claimed concept relates generally to compact heat exchangers and, more particularly, to a compact heat exchanger formed via additive manufacturing.

### 2. Related Art

Heat exchangers typically each include a hot leg that receives a fluid at a first temperature and a cold leg that receives a separate fluid of a second, lower temperature, with the two legs being in heat transfer relation with one another to cause heat from the fluid in the hot leg to be transferred to the fluid in the cold leg. While heat exchangers have been generally effective for their intended purposes, they have not been without limitation.

Since a compact heat exchanger involves some type of an interface, such as one formed of metal or other heat conductive material, between the relatively hotter fluid and the relatively colder fluid, the interface itself experiences stresses, both from thermal differences and pressure differences between the two fluids and due to other factors. Such stresses can be harmful to the long term resilience of the compact heat exchanger. However, current manufacturing methodologies have met with limited success in cost-effectively protecting compact heat exchangers from warping and damage due to such stresses.

Additionally, the efficiency of any given compact heat exchanger is dependent upon, among other factors, the configurations of the flow channels in the hot leg and in the cold leg. Known manufacturing methodologies of compact heat exchangers have placed limits upon the ways in which the channels can be configured, with the result that compact heat exchangers have had limited performance. Improvements thus would be desirable. EP 2 636 982 discloses a heat exchanger according to the preamble of claim 1.

### SUMMARY

An improved heat exchanger is formed from a plurality of very thin layers that are affixed to one another and that are formed via additive manufacturing. Such additive manufacturing enables the configurations of the heat exchanger's flow channels and the arrangements of such flow channels to be optimized for improved heat transfer performance, for improved resistance to thermal and mechanical stresses, and for optimization based upon other factors such as the environment in which the heat exchanger will be situated.

Accordingly, an aspect of the disclosed and claimed concept is to provide an improved heat exchanger formed from a plurality of layers that are affixed to one another via additive manufacturing.

Another aspect of the disclosed and claimed concept is to provide a heat exchanger having channels that are optimized for heat transfer.

Another aspect of the disclosed and claimed concept is to provide an improved heat exchanger having channels that are optimized to reduce thermal and mechanical stresses thereon.

Another aspect of the disclosed and claimed concept is to provide an improved heat exchanger that is formed from a plurality of layers affixed to one another wherein a layer includes one of: less than the entirety of a header of the heat exchanger, a portion of a core having at least a portion of a first channel and at least a portion of a second channel that are fluidly isolated from one another, or at least a portion of a channel and at least a portion of a header.

Accordingly, an aspect of the disclosed and claimed concept is to provide an improved compact heat exchanger that can be generally stated as including a plurality of layers affixed to one another and together forming a core and a header apparatus, the core having formed therein a plurality of channels, the plurality of channels comprising a number of first channels and a number of second channels, at least a portion of the number of first channels being position for being in heat transfer relation with at least a portion of the number of second channels, the header apparatus comprising at least a first header that is in fluid communication with at least some of the channels of the number of channels, the at least first header having a channel end and a connection end, the channel end being situated adjacent the core and including a number of flow connections that are in direct fluid communication with the at least some of the channels, the connection end having an opening that is structured to be connected in fluid communication with another flow structure, the at least one header comprising a flow passage that extends between the channel end and connection end and that enables fluid communication between the number of flow connections and the opening. At least one of the layers of the plurality of layers is at least one of: a layer that can be generally stated as including a portion of but less than the entirety of the at least first header and that has formed therein at least a portion of the flow passage, a layer that can be generally stated as including at least a portion of the core having formed therein at least a portion of a first channel and at least a portion of a second channel that are fluidly isolated from one another, and a layer that can be generally stated as including at least a portion of the core having formed therein at least a portion of a channel of the plurality of channels and that further comprises a portion of the at least first header and that has formed therein at least a portion of the flow passage.

### BRIEF DESCRIPTION OF THE DRAWINGS

A further understanding of the disclosed and claimed concept can be gained from the following Description when read in conjunction with the accompanying drawings in which:
Fig. 1 is a perspective view of an improved compact heat exchanger in accordance with a first embodiment of the disclosed and claimed concept;
Fig. 2 is an exploded diagrammatic view of the heat exchanger of Fig. 1;
Fig. 3 is a depiction of a fluid flow path of a first leg and a second leg of the heat exchanger of Fig. 1 situated in heat transfer relation;
Fig. 4 is a typical sectional view as taken along line 4-4 of Fig. 1;
Fig. 5 is a view similar to Fig. 4, except depicting a sectional view of an improved compact heat exchanger in accordance with a second embodiment of the disclosed and claimed concept;
Fig. 6 is a view similar to Fig. 5, except depicting a sectional view of an improved heat exchanger in accordance with a third embodiment of the disclosed and claimed concept;
Fig. 7 is a view similar to Fig. 4, except depicting a sectional view of an improved heat exchanger in accordance with a fourth embodiment of the disclosed and claimed concept;
Fig. 8 is a schematic depiction of an improved compact heat exchanger in accordance with a fifth embodiment of the disclosed and claimed concept;
Fig. 9 is an end view of the heat exchanger of Fig. 8;
Fig. 10 is a depiction of the flow channels of the compact heat exchanger of Fig. 8;
Fig. 11 is another view of the flow channels that are depicted in Fig. 10; and
Fig. 12 is a schematic depiction of an improved compact heat exchanger in accordance with a sixth embodiment of the disclosed and claimed concept.

Similar numerals refer to similar parts throughout the specification.

### DESCRIPTION

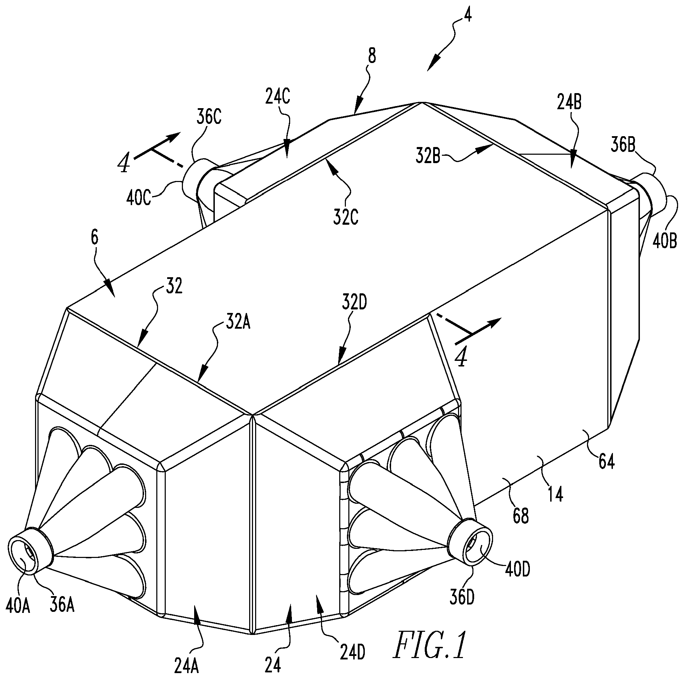

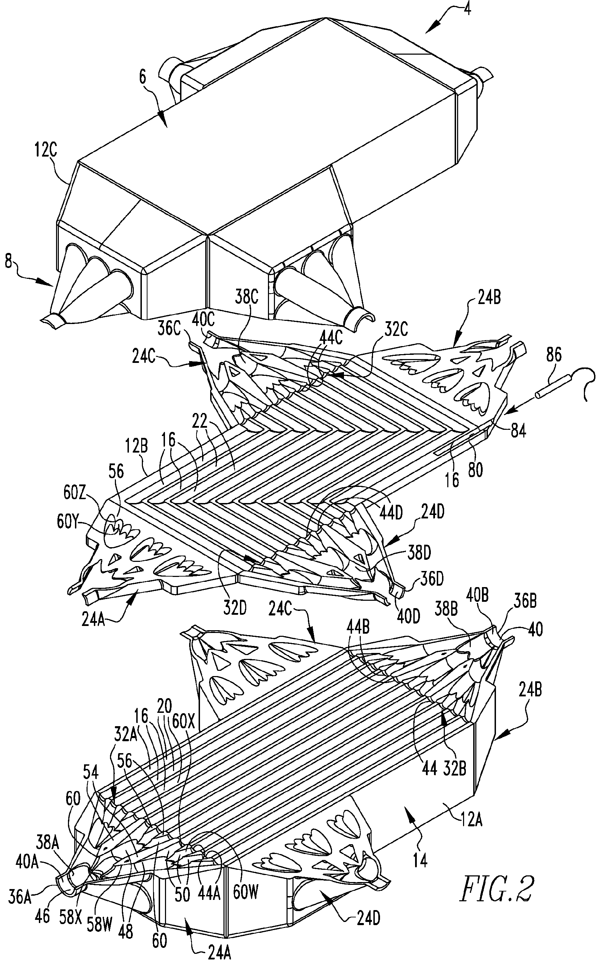

An improved compact heat exchanger 4 in accordance with a first embodiment of the disclosed and claimed concept is depicted in Figs. 1 and 2. The compact heat exchanger 4 is formed via additive manufacturing. According to the invention, additive manufacturing is performed by placing successive layers of powdered metal particles or other types of particles atop one another and selectively applying a laser, ion beam, or other form of concentrated energy to each layer of metal particles to fuse certain of the metal particles together and/or to another layer. When finished, the stack of layers of metal particles typically include some metal particles that have been fused together to form a resultant product and other metal particles that are unfused. The application of a blast of compressed air to the stack of layers of metal particles removes the unfused metal particles from the fused metal particles to result in a finished product. If desired, the finished product can undergo further processing via sintering or other processing to reduce the porosity that is inherent in additive manufacturing. As will be set forth in greater detail below, the novel and inventive use of additive manufacturing to form the heat exchanger 4 advantageously enables the heat exchanger 4 to be configured for optimized heat transfer and/or optimized resistance to thermal and mechanical stresses and/or other optimizations.

The improved heat exchanger 4 can be said to include a core 6 and a header apparatus 8 that are co-formed in situ as part of an additive manufacturing process. That is, the heat exchanger 4 comprises a plurality of layers, such as are indicated at the numerals 12A, 12B, and 12C in Fig. 2, that are affixed to one another and that are co-formed as a single piece unit. It is understood that Fig. 2 is intended to schematically represent that the heater exchanger 4 is formed from a plurality of layers, and that these plurality of layers are represented by the layers 12A, 12B, and 12C. It is further understood, however, that the use of additive manufacturing would more typically employ numerous layers far greater in quantity than the three layers that are expressly depicted individually in Fig. 2. That is, the layers 12A, 12B, and 12C would likely themselves each include a large number of separate layers that are individually fused to other layers using an additive manufacturing process, and the depiction of the layers 12A, 12B, and 12C in Fig. 2 is thus intended to be merely illustrative of an additive manufacturing process rather than expressly depicting the performance of such a process.

As can be understood from Figs. 1 and 2, the core 6 can be said to include a core body 14 that is formed of the fused metallic material, and the core body 14 can be seen to include a plurality of channels 16 that are formed therein. The channels 16 are typically elongated, and some of the channels 16 may have more than one direction of elongation. The channels 16 include a plurality of first channels 20, such as are depicted in Fig. 2 as appearing on the layer 12A, and a plurality of second channels 22 that are depicted in Fig. 2 as appearing on the layer 12B. As will be set forth in greater detail below, the plurality of channels 16 can optionally include a number of other channels 16 that are provided for other purposes. As employed herein, the expression "a number of' and variations thereof shall refer broadly to any non-zero quantity, including a quantity of one.

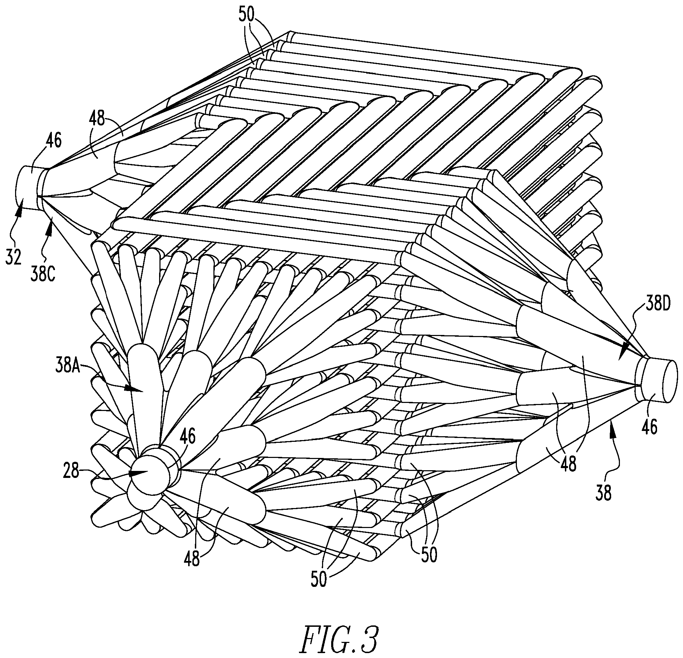

The header apparatus 8 can be said to include a plurality of headers that are indicated, as in Fig. 1, at the numerals 24A, 24B, 24C, and 24D, it being noted that such headers may be referred to herein individually or collectively with the numeral 24. The heat exchanger 4 is, in the example presented herein, a counter current heat exchanger with cross flow in the regions near at least some of the headers 24. As such, among the exemplary headers 24, the header 24A is an exemplary first inlet header, and the header 24B is an exemplary second outlet header. The headers 24A and 24B are in fluid communication with the first channels 20 to form a first leg 28 that is show in Fig. 3 and which, in the depicted exemplary embodiment, is a cold leg. The header 24C is an exemplary second inlet header, and the header 24D is an exemplary second outlet header. The headers 24C and 24D are in fluid communication with the second channels 22 to form a second leg 30 that is likewise depicted in Fig. 3 and which, in the depicted exemplary embodiment, is a hot leg. The first and second legs 28 and 30, i.e., the exemplary cold and the exemplary hot leg, are situated in heat transfer relation with one another and are depicted in Fig. 3 in the absence of the core body 14. It is expressly noted that the use of the terms "cold" and "hot" and the like herein is intended to be merely exemplary in nature and is intended to be completely non-limiting.

As can further be understood from Fig. 2, the headers 24A, 24B, 24C, and 24D each include a channel end 32A, 32B, 32C, and 32D, respectively, that may be referred to herein individually or collectively with the numeral 32. Each channel end 32 is situated directly adjacent and in fluid communication with various of the channels 16. The headers 24A, 24B, 24C, and 24D each further include a connection end 36A, 36B, 36C, and 36D, respectively, that are each situated opposite the respective channel end 32 and that are structured to be connected in fluid communication with another flow structure such as a pipe or the like without limitation. The headers 24A, 24B, 24C, and 24D can each be said to have formed therein a flow passage 38A, 38B, 38C, and 38D, respectively, which may be referred to herein individually or collectively with the numeral 38. The flow passages 38 each extend between the respective channel end 32 and the respective connection end 36 and permit fluid communication between the headers 24 and the first and second channel 20 and 24.

As can be best understood from the layers 12A and 12B in Fig. 2, the headers 24A, 24B, 24C, and 24D each include an opening 40A, 40B, 40C, and 40D, respectively, which may be referred to herein individually or collectively with the numeral 40. The openings 40 are situated at the respective connection end 36. The headers 24A, 24B, 24C, and 24D each further include a plurality of flow connections 44A, 44B, 44C, and 44D, respectively, that may be referred to herein individually or collectively with the numeral 44. The flow connections 44 are each in direct fluid communication either with one the first channels 20 or with one of the second channels 22. The flow passages 38 extend between the openings 40 and the flow connections 44 and provide fluid communication therebetween and with the respective first and second channels 20 and 22, as will be set forth in greater detail below. In this regard, it is reiterated that the headers 24A and 24B are in fluid communication with the first channels 20 to form the first leg 28, and that the headers 24C and 24D are in fluid communication with the second channels 22 to form the second leg 30, and it noted that the first leg 28 and the second leg 30 are fluidly isolated from one another and rather are situated in heat transfer relation with each other.

As can be understood from the layers 12A and 12B in Fig. 2, each flow passage 38 includes a plurality of flow connections 44 that are in fluid communication with the corresponding opening 40 and, as mentioned above, are in direct fluid communication with the corresponding first channels 20 or second channels 22 that are in fluid communication therewith. The fluid flow through one of the openings 40 forms the comprehensive flow through the corresponding flow connections 44, and vice versa.

The headers 24 are each configured to provide flow communication between the opening 40 and the plurality of corresponding flow connections 44 to provide direct fluid communication between the flow connections 44 and the corresponding first channels 20 or second channels 22, much in the fashion in which blood vessels of a living creature include main flow channels and successively smaller secondary channels and tertiary channels, for example, in fluid communication therewith that directly feed whatever is in need of the provided fluid flow. This is in advantageous contrast to a conventional manifold of a flow system wherein a relatively large passage and a plurality of smaller passages are all in fluid communication with a common plenum that does not necessarily direct the fluid flow into or from the relatively smaller channels. In an example wherein fluid flows from a relatively large channel into a plenum and then into relatively smaller channels, the fluid flow impinges on the regions of the plenum that are situated adjacent its connections with the smaller channels. Such impingement results in stagnation of flow at such locations and consequent pressure drop and turbulence.

Likewise, in an example where fluid flows out of the relatively smaller channels and into the plenum and thereafter out of the relatively larger channel, the flow of fluid into the plenum is in the form of a free jet that experiences a pressure drop as the free jet mixes with the fluid within the plenum. Is such a situation, the regions of the plenum that do not aligned to receive fluid flow that is directed from the relatively smaller channels experiences areas of fluid stagnation and thus eddy currents and resultant turbulence. Such fluid flow in a plenum-type flow system is less than optimum due to the pressure drops and other flow limitations that necessarily occur with the exemplary plenum-based geometry and also due to the vibrations and mechanical stresses that are placed on such a flow system.

Advantageously, however, the headers 24 of the improved heat exchanger 4 are configured to provide improved fluid communication between the opening 40 and the corresponding flow passages 44. As can further be seen in Fig. 2, the exemplary flow connections 44 each include a first flow passage portion 46, which is a portion of the fluid flow as it is flowing through the opening 40. The exemplary flow connections 44 each further include a second flow passage portion 48 and a third flow passage portion 50. The third flow passage portions 50 are situated at the channel end 32 and are what provide direct fluid communication to the connected first channels 20 or to the second channels 22. The second flow passage portions 48 are each interposed between a corresponding first flow passage portion 46 and a corresponding third flow passage portion 50. That is, the first, second, and third flow passages 46, 48, and 50 of any given flow connection 44 are sequentially connected together in fluid communication such that the fluid flow that occurs through the third flow passage portion 50 is a part of the comprehensive fluid flow through the corresponding first flow passage portion 46, and vice versa.

In this regard, it can be seen that the headers 24 each include a number of primary flow directors 54 and a number of secondary flow directors 56 that provide flow direction between the openings 40 and the corresponding flow connections 44. The exemplary secondary flow directors 56 are generally each situated adjacent the core 6 and between either a pair of first channels 20 or a pair of second channels 22.

The following example relates to the header 24A wherein fluid enters the opening 40A and flows through the flow passage 38A and out of the flow connections 44A into the first channels 20 that in direct fluid communication therewith. In the header 24A, the fluid initially flows through the opening 40A and into the first flow passage portion 46 wherein it encounters a pair of external surface portions 58W and 58X of the primary flow directors 54 which direct the fluid to flow into the relatively smaller but more plentiful second flow passage portions 48. The fluid flow in each second flow passage portion 48 thereafter encounters a pair of external surface portions 60W and 60X on each of the secondary flow directors 56 that divide the fluid flow from the second flow passage portion 48 into the relatively smaller but more plentiful third flow passage portions 50. Another set of external surface portions 60Y and 60Z are shown in Fig. 2 on the layer 12B as further dividing the fluid flow from the second flow passage portions 48A that are depicted as being formed at least in part on the layer 12A and which direct the fluid flow from such second flow passage portions 48A into another set of first channels 20 that are situated at the underside of the layer 12C and that are thus not expressly depicted in Fig. 2.

The external surface portions 60W, 60X, 60Y, and 60Z, which may be referred to collectively or individually herein with the numeral 60, thus form some of the third flow passage portions 50 by, in the example of the header 24A, dividing and directing the flow of fluid from one of the second flow passage portions 48 into a plurality of relatively smaller third flow passage portions 50 and then directly into the first passages 20 that are in fluid communication therewith. The external surface portions 60 thus advantageously avoid at least some of the stagnation and pressure drop that would exist in the absence of the secondary flow directors 56. Likewise, the external surface portions 58W and 58X divide and direct the flow from the first flow passage portion 46 into a larger number of relatively smaller second flow passage portions 48. This reduces pressure drop and turbulence in flowing from the opening 40A to the flow connections 44A compared with a conventional manifold.

When fluid is flowing in the reverse direction through one of the headers 24, such as with the outlet header 24B, the primary flow directors 54 are in direct fluid communication with the corresponding first channels 20 and direct the flow from the third flow passage portions 50 into a relatively larger second flow passage portion 48. Likewise, the primary flow directors 54 direct with minimal pressure drop the fluid flow from the second flow passage portions 48 into the first flow passage portion 46 of the header 24B to permit the fluid to flow out of the opening 40B and into another flow structure such as a connected pipe or the like.

It thus can be seen that by configuring the flow passages 38 to provide smooth fluid communication between one of the openings 40 and the corresponding flow connections 44, reduced pressure drop is enabled, as is improved fluid flow having less turbulence and stagnation, all of which are desirable in a fluid flow environment. The aforementioned additive manufacturing process enables the improved heat exchanger 4 to be configured with its headers 24 designed in such a fashion, and this can be done in a relatively inexpensive fashion. The improved headers 24 of the improved heat exchanger 4 thus enable the heat exchanger 4 to have improved fluid flow performance in a cost-effective and mechanically reliable fashion, which is highly desirable and advantageous. Furthermore, the versatility and variability of the additive manufacturing process enables the design of the headers 24 to be optimized for fluid flow, i.e., designed with a computer system employing fluid system design software, and the completed design can be downloaded to an additive manufacturing machine that will simply manufacture the heat exchanger whose design was provided to it. Such optimization can be altered depending upon various needs of any given application to provide appropriate optimization, and such efficiency of modification is highly advantageous and desirable.

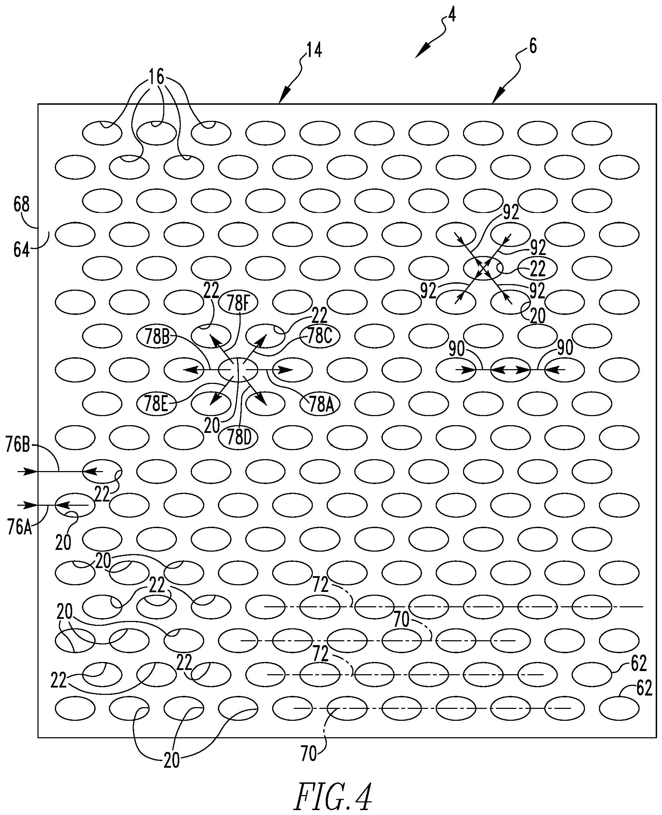

As can be seen in Fig. 4, the first and second channels 20 and 22 are of a cross-sectional shape that is oriented transverse to the direction of flow therethrough and that has a perimeter 62 which, in the depicted exemplary embodiment, is arcuate, non-circular, and is of an approximately oval or elliptical or semi-elliptical shape. The shape of the perimeter 62 is an example of a cross-sectional shape of a flow channel that is optimized to provide low pressure drop while providing elevated rates of heat transfer. As will be explained in greater elsewhere herein, the shape of any given channel can be tailored to provide optimization for any of a wide variety of considerations such as thermal and mechanical stresses and to provide optimization based upon other considerations. The depicted exemplary first channels 20 and the depicted exemplary second channels 22 in Fig. 4 are depicted as being of the same shape and thus the same perimeter 62 or form factor and also being of the same size. Further in an exemplary fashion, the first channels 20 are arranged in Fig. 4 in a plurality of first rows 70, and the second channels 22 are depicted in Fig. 4 as being likewise arranged in a plurality of second rows 72, with the first rows 70 alternating with the second rows 72. The perimeter 62 of the first and second channels 20 and 22 can be said to have a major axis that is longer than a minor axis thereof, and the major axes of the first channels 20 are aligned with one another along the various first rows 70. The same can be said of the second channels 22 having their major axes aligned along the second rows 72. The first and second rows 70 and 72 are oriented in the horizontal direction from the perspective of Fig. 4. In the exemplary arrangement of the first and second channels 20 and 22 in Fig. 4, a first row 70 of the first channels 20 is situated adjacent a second row 72 of second channels 22 which is, in turn, situated adjacent another first row 70 of the first channels 20, etc.

As can further be seen in Fig. 4, the core body 14 includes a wall 64 having a wall surface 68 that faces toward the exterior of the heat exchanger 4 and that faces generally away from the first and second channels 20 and 22. The wall 64 could be said to be of a wall thickness 76A between one of the first channels 20 and the wall surface 68 and to be of another wall thickness 76B between one of the second channels 22 and the wall surface 68. In this regard, the wall thickness 76A would refer to the minimum thickness between the wall surface 68 and the perimeter 62 of the first channel 20 closest thereto. The wall thickness 76B would likewise be defined as being the minimum distance between the wall surface 68 and the perimeter 62 of the second channel 22 that is closest thereto. In the exemplary embodiment depicted herein, it can be seen that the wall thickness 76A is less than the wall thickness 76B. The relatively greater wall thickness 76B has advantageously been optimized, for instance, to provide greater stiffening of the core body 14 when, for example, the second channels 22 carry fluid that is of a relatively greater pressure, i.e., static pressure, than that carried by the first channels 20. Such optimization can be based upon differences in static pressure, dynamic pressure, etc., and the various relationships between the wall thicknesses 76A and 76B that are presented herein are intended merely as examples of what such optimization might provide for use in a given exemplary environment.

It should be understood that other types of optimizations of the relationships among the first and second channels 20 and 22, including their arrangement and the thicknesses of the wall 64 therebetween, etc., can be provided as needed. For instance, the first and second channels 20 and 22 are depicted in Fig. 4 as having various adjacent relationships with one another. Any given first or second channel 20 or 22 (a first channel 20 in the example presented in Fig .4) is situated adjacent another channel 16 with which it is in fluid communication, as is indicated at the numeral 78A, and is further situated adjacent another such channel 16 with which it is likewise in fluid communication, as is indicated at the numeral 78B. That is, in the depicted exemplary embodiment, at least some of the first channels 20 are each situated between a pair of other first channels 20 as indicated at the numerals 78A and 78B in the depicted exemplary embodiment. It is noted that some of the channels 16, such as those at the periphery of the core 6, may not necessarily possess all of the relationships indicated herein, although many of the other channels 16 do. The relationships 78A and 78B are oriented in the horizontal direction from the perspective of Fig. 4, and the three identified first channels 20 are in the same first row 70.

The aforementioned first channel 20 that is situated between the two adjacent first channel 20, as is indicated at the numerals 78A and 78B, is further adjacent four other channels 16 with which it is fluidly isolated, i.e., four adjacent second channels 22, as is indicated with the numerals 78C, 78D, 78E, and 78F. The indicated relationships 78C, 78D, 78E, and 78F are oriented in directions that are neither vertical nor horizontal from the perspective of Fig. 4 and rather are each of an oblique or diagonal orientation in Fig. 4.

As is indicated by the adjacent relationships 78A and 78B, it can be seen that the indicated adjacent first channels 20 are separated from one another by a first distance 90, meaning that the core body 14 is of a minimum thickness between the adjacent pairs of first channels 20 that is equal to the first distance 90. The exemplary first distance 90 is equal between both adjacent pairs of the first channels 20 in the depicted exemplary embodiment. It is reiterated that this first distance 90 is the distance between adjacent channels 16 that are in fluid communication with one another in the example of Fig. 4.

Such a first channel 20 can further be said to be of a second distance 92 from the four other channels 16 that are adjacent thereto and that are fluidly isolated from the first channel 20, i.e., the four second channels 22 that are indicted with the adjacent relationships 78C, 78D, 78E, and 78F, and the distance is equal to a second distance 92. The second distance 92 represents the minimum thickness of the core body 14 between one of the first channels 22 and each of the adjacent second channels 22 that are fluidly isolated from the first channel 20. In the depicted exemplary embodiment, the second distances 92 are depicted, for instance, as being equal to one another.

In this regard, it can be understood that the first distances 90 and the second distances 92 can be adjusted as needed to provide optimization between the various considerations of heat transfer rate, thermal and mechanical stresses, flow rates and pressures, and other considerations that may exist in creating the design of the heat exchanger 4.

It is also noted that each of the first and second channels 20 and 22 in Fig. 4 is depicted as having a cross-sectional area 96 that is equal to one another. Again, the cross-sectional areas 96 can be adjusted as needed in conjunction with any of the other optimizations that may be needed or provided in order to optimize the various performance factors mentioned herein and/or other factors.

As can be further seen in Fig. 2 and in particular on the layer 12B, the plurality of channels 16 further include an additional channel 80 that is formed in the wall 64 between one of the first channels 20 and the wall surface 68 adjacent thereto. The additional channel 80 is elongated and includes an opening 84 to the exterior of the heat exchanger 4 and is configured to receive therein an instrument 86 of one kind or another. For instance the instrument 86 could be a device such as a temperature sensor or the like, in which case the additional channel 80 would be an instrumentation channel. Similarly, the instrument 86 could instead be a number of heaters that are configured to preheat the heat exchanger 4 to reduce thermal shock when cold and hot fluids are first introduced into the channels 16. Such heating would be particularly advantageous during thermal cycling to reduce the possible deleterious effects of a sudden onset of thermal stress on the core 6. In the case of the instrument 86 being a number of heaters, the additional channel 80 might be one or more such additional channels 80 that may be positioned elsewhere on the core 6 than is expressly depicted in Fig. 2 and would receive the number of heaters therein.

It is noted that the additional channel 80 is a part of the overall design of the heat exchanger 4, and the wall 64 thus can be optimized to resist the concentration of thermal and mechanical stresses and other stresses that may otherwise result from the additional channel 80 being formed at a discrete location on the heat exchanger 4. In this regard, the dimensions of the core body 14 in the vicinity of the additional channel 80 can be configured to be heavier, as needed, or the additional channel 80 could alternatively be positioned in a different location on the core body 14 with relatively minimal and/or mechanical stresses and/or based upon other considerations.

The additional channel 80 is formed in the heat exchanger 4 during initial manufacture thereof during the additive manufacturing process, with the result that the additional channel 80 would be free work hardening or other residual stresses that might result from forming the additional channel 80 with, for example, a drill bit applied to the wall 64. It is also noted that the opening 84 is situated on a surface of the header 24B that is oblique to the longitudinal extent of the additional channel 80, which would typically be very difficult to drill from such an angle if a conventional drill bit would be used. While other processes such as lasers and the like can be employed in such a scenario to enable the drilling of such an additional channel or a pilot hole therefor in such an opening relationship to an exterior surface. It is noted, however, that the use of such lasers or other methodologies is costly compared with the advantageously minimal cost to form the additional channel 80 when using the additive manufacturing process mentioned herein.

It thus can be understood that the heat exchanger 4 is designed in such a fashion that its various structures and the first and second legs 28 and 30 are together optimized to provide an overall design that provides desirable, i.e., optimized, characteristics for pressure drop, thermal and mechanical stresses, heat transfer efficiency, and based upon other considerations. Depending upon the needs of the particular application, the various interrelationships among the parts of the heat exchanger 4 and the parts of the first and second legs 28 and 30 can be adjusted depending upon the needs of the particular application to advantageously provide other optimization that is optimized to meet other needs of other applications such as varying pressures and temperatures, and other such considerations, at minimal cost.

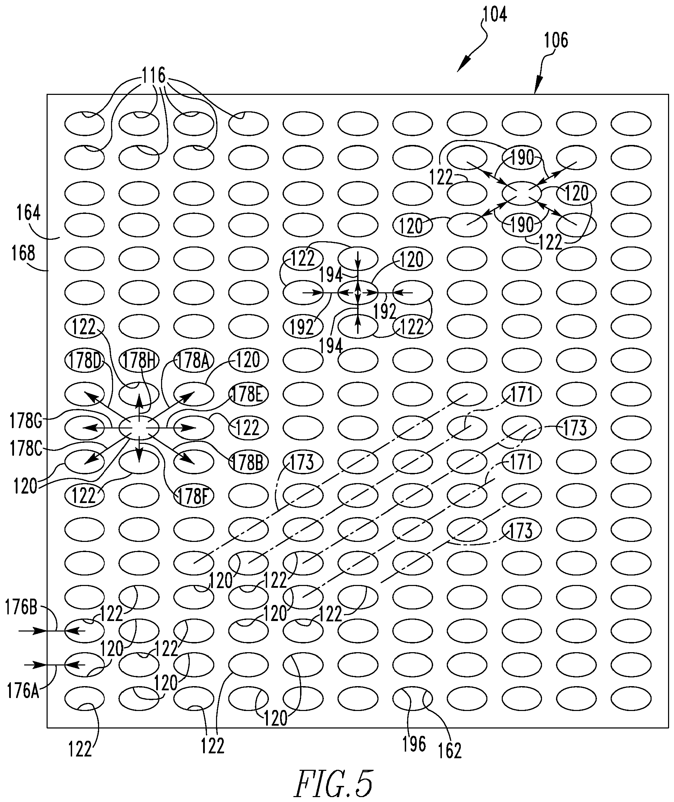

An improved heat exchanger 104 similar to the heat exchanger 4 is schematically depicted in Fig. 5 and is represented by the sectional view that is similar to the sectional in Fig. 4 of the heat exchanger 4. The heat exchanger 104 may be configured to look identical to the heat exchanger 4 from the exterior, although this need not necessarily be the case.

The heat exchanger 104 includes a core 106 having formed therein a plurality of channels 116 that are elongated and that include a plurality of first channels 120 and a plurality of second channels 122. The first channels 120 are in fluid communication with one another, and the second channels 122 are likewise in fluid communication with one another, with the first channels 120 being fluidly isolated from the second channels 122.

In the exemplary embodiment configured in Fig. 5, the first and second channels 120 and 122 are of a shape having an arcuate and non-circular perimeter 162, all of which are of the same size and shape as one another. For the sake of completeness, it is reiterated that the sizes and/or shapes could be varied as needed depending upon the needed optimization of the heat exchanger 104 in the particular environment in which it is intended to be used. The core 106 has a wall 164 having a wall surface 168, and the first and second channels 120 and 122 are of equal distances from the wall surface 168. That is, the wall 164 is of a minimum wall thickness 176A between the wall surface 168 and a first channel 120 adjacent thereto, and the wall thickness 176A is equal to another minimum wall thickness 176B between the wall surface 168 and a second channel 122 adjacent thereto. Again, such wall thicknesses can be optimized depending upon the needs of the particular application.

As can further be understood from Fig. 5, the first and second channels 120 and 122 are of a different arrangement than the first and second channels 20 and 22 in the heat exchanger 4 as depicted in Fig. 4 inasmuch as the first channels 120 and the second channels 122 are not arranged in horizontal rows of channels that are in fluid communication with one another. It is reiterated that the rows in Fig. 4 are aligned with the major axes of the first and second channels 20 and 22, which is not the case with the first and second channels 120 and 122 in Fig. 5. Rather, each first channel 20 is adjacent four channels 116 with which it is fluidly isolated, i.e., four of the second channels 122, and is further adjacent another four other channels 116 with which it is in fluid communication, i.e., four other first channels 120. For example, Fig. 5 depicts one of the first channels 120 as having four adjacent relationships 178A, 178B, 178C, and 178D with four other adjacent first channels 120 with which it is in fluid communication. The adjacent relationships 178A, 178B, 178C, and 178D are oriented neither in the horizontal direction nor in the vertical direction with respect to Fig. 5 and rather are in an oblique direction or in a diagonal orientation. This same first channel 120 and other such first channels 120 are each further adjacent four other channels 116 with which it is fluidly isolated and is situated in heat transfer relation, i.e., four of the second channels 122, as is indicated at the adjacent relationships 178E, 178F, 178G, and 178H. The exemplary adjacent relationships 178E, 178F, 178G, and 178H are oriented in the horizontal and vertical directions from the perspective of Fig. 5, by way of example. It can be seen that the channels 116 adjacent the wall surface 168 are not each necessarily adjacent four other channels 116 with which it is in fluid communication and another four channels 116 from which it is fluidly isolated, but it is understood that other channels 116 of the exemplary heat exchanger 104 do share such a relationship. Such an interrelationship between the first channels 120 and the second channels 122 would, as a general matter, typically be capable of providing a greater rate of heat transfer between the first channels 120 and the second channels 122 compared with, for instance, the heat exchanger 4. Such an arrangement of first and second channels 120 and 122 as in Fig. 5 might be the result of optimization for a certain purpose such as optimized heat transfer in the set of circumstances for which the heat exchanger 104 was intended to be used.

It can further be seen that the adjacent relationships 178A, 178B, 178C, and 178D are each of an equal first distance 190. The adjacent relationships 178E and 178G are in the horizontal direction from the perspective of Fig. 5 and indicate that a second distance 192 separates the first channel 120 from two of the adjacent second channels 122, the two second distances 192 being equal to one another. The first channel 120 is further spaced a third distance 194 in the vertical direction from the perspective of Fig. 5 between the other two adjacent second channels 122 that are indicated with the relationships 178F and 178H, the third distances 194 being equal to one another. It can be seen that the first distances 190, i.e., the distances between the first channels 120 that are in fluid communication with one another and are thus potentially of the same or similar temperature, is greater than either of the second distances 192 and the third distances 194. The second and third distances 192 and 194 are distances between the first channel 120 and the second channels 122 with which the first channel 120 is fluidly isolated and which likely would be of another temperature and in a heat transfer relationship with the first channel 120. Such relative positioning, as is indicated by the first, second, and third distances 190, 192, and 194, i.e., thicknesses of the wall 164, provide a further example of how heat transfer rates and efficiency can be optimized or adjusted depending upon needs of any particular application.

It is further noted that the first and second channels 120 and 122 are of the same cross-sectional area 196 in a direction that is transverse to the direction of flow therein. It is reiterated that this similarity of cross-sectional areas 196 is one of a plurality of relationships that can be adjusted to provide performance that meets any of a variety of criteria for suitability in a given application.

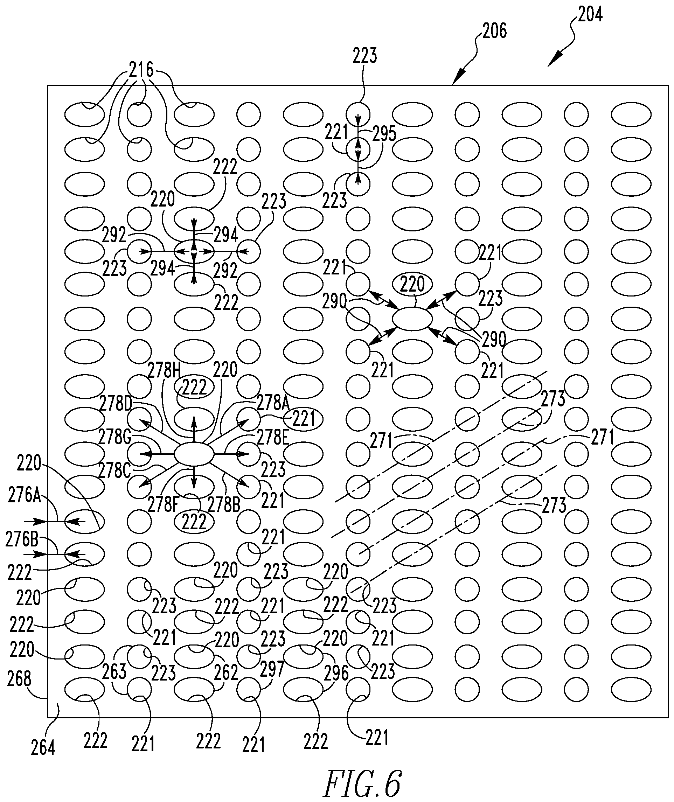

An improved heat exchanger 204 in accordance with a third embodiment of the disclosed and claimed concept is depicted schematically by the cross-sectional view of its core 206 in Fig. 6. The core 206 has a plurality of elongated channels 216 formed therein that include a plurality of first channels 220 and 221 in fluid communication with one another and a plurality of second channels 222 and 223 that are in fluid communication with one another. The exemplary first channels 220 and the exemplary second channels 222 are each of a cross-sectional shape having a perimeter 262 that is of the same size and shape as the exemplary perimeter 162 of the first and second channels 120 and 122 in Fig. 5, i.e., oval or elliptical or semi-elliptical. It is noted, however, that the first channels 221 and the second channels 223 are of an arcuate shape that is of a circular perimeter 263. The first and second channels 220 and 222 are of one cross-sectional area 296, and the first channels 221 and the second channels 223 are of another cross-sectional area 297 which, in the depicted exemplary embodiment, is smaller than the cross-sectional area 296.

The first channels 220 and 221 generally each share the same type of interrelationship (except perhaps at the periphery of the core 206) with the second channels 222 and 223 as evidenced by the adjacent relationships 278A, 278B, 278C, 278D, 278E, 278F, 278G, and 278H that are positionally similar to the adjacent relationships 178A, 178B, 178C, 178D, 178E, 178F, 178G, and 178H. It is noted, however, that by providing the first and second channels 221 and 223 to have the relatively smaller cross-sectional area 297, the first distances 290 between any of the first channels 220 or 221 and the four other first channels 220 or 221 that are diagonally adjacent (according with the adjacent relationships 278A, 278B, 278C, and 278D) are greater than the first distances 190 in Fig. 5. Likewise, the first distances 290 are greater than the second distances 292 indicated by the adjacent relationships 278E and 278G between a channels 216 and a pair of horizontally adjacent other channels 216 that are not in fluid communication therewith and rather are fluidly isolated therefrom. Such second distances 292 are likewise greater than the third distances 294 and the fourth distances 295 that are represented in the vertical direction from the perspective of Fig. 6 between vertically adjacent pairs of first and second channels 220 and 222 and between vertically adjacent first and second channels 221 and 223, respectively. Again, such spacings and interrelationships provide relative proximity or relative distance between adjacent channels 216 in a fashion that can optimize heat transfer and/or can optimize the structural material of the core 206 that is situated between channels 216 that are fluidly isolated from one another and between which thermal and mechanical stresses would exist.

It can further be seen from Fig. 6 that the first channels 220 are of one distance as at 276A from the wall surface 268 of the wall 264 and that the second channels 222 are of a second such distance 276B from the wall surface 268 that is equal to the distance 276A. Other relative, equal, and/or unequal wall thicknesses can be provided depending upon the needs of the particular application and the needed performance of the heat exchanger 204.

It thus can be understood that the positions among the various channels 216 and the various shapes and sizes of the various channels 216 can be selected based upon various optimization factors that relate to concerns regarding heat transfer capabilities, thermal and mechanical stresses, and other such factors. Other variations will be apparent.

While Fig. 6 is depicted herein as being an cross-sectional view that is taken of another heat exchanger 204 that is different than the heat exchanger 104 that is depicted in Fig. 5, it is understood that Fig. 6 could be used to alternatively depict the way in which the various channel 116 of Fig. 5 can change in size and shape from one longitudinal position along the channels 116 to another longitudinal position along the same channels. For example, Fig. 6 could alternatively depict that certain of the first channels 120 could transition from one location in a heat exchanger, represented by Fig. 5, to another location, represented by Fig. 6, in the same heat exchanger. For instance, certain of the first channels 120 in Fig. 5 could change their shape and cross-sectional area from being arcuate round at one position along their longitudinal extent, as is indicated at Fig. 5, to be of a difference arcuate shape and cross-sectional area at another position along their longitudinal extent, as is indicated in Fig. 6. The same thing could be said of certain second channels 122 that transition into relatively smaller circular second channels 223 between Fig. 5 and Fig. 6. Such changes in the sizes and shapes, for instance, of the various channels would correspondingly alter the dimensions of the walls of the core therebetween and also alter the flow characteristics of such channels. Such a design could result for the performance needs of the particular heat exchanger for the intended application. It thus is understood that any given channels in a heat exchanger need not be of a fixed cross-sectional shape or a fixed cross-sectional perimeter or cross-sectional area along the entirety of its longitudinal extent, and rather such dimensions and the corresponding wall dimensions can vary depending on particular needs of given applications. Likewise, the varying wall dimensions could be what are being optimized based upon the needed resistance to thermal and mechanical stresses in a given application, with the channel shapes and sizes being what results from such an optimization of the walls of the core.

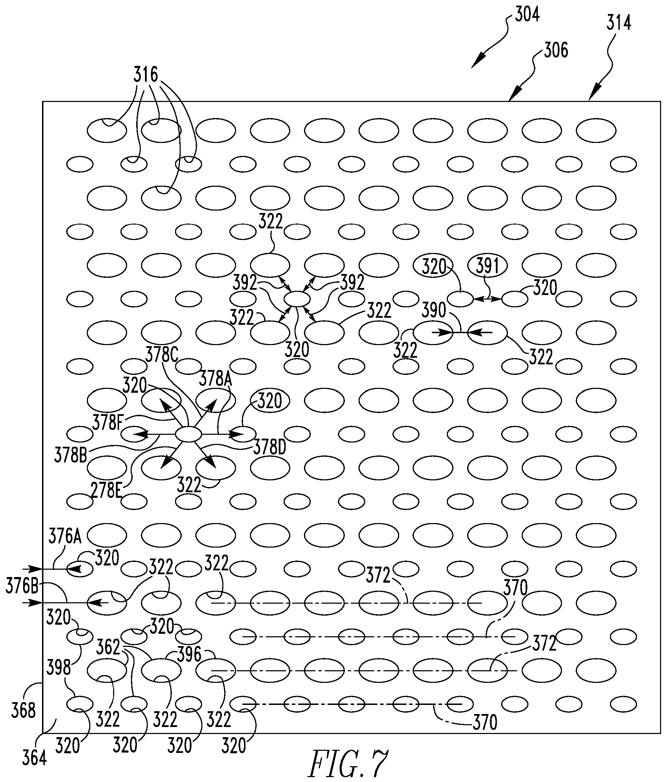

Another example of such optimization is depicted in Fig. 7, which depicts another heat exchanger 304 in accordance with a fourth embodiment of the disclosed and claimed concept. The heat exchanger 304 has a core 306 with a core body 314 wherein its channels 316 transition from what is depicted in Fig. 4 at one location in the heat exchanger 304 to what is depicted in Fig. 7 at another location in the same alternative heat exchanger 304. That is, Fig. 7 could represent the way in which the first channels 20 change from their cross-sectional area 96 in Fig. 4 to be of a relatively smaller cross-sectional area 398 at a different location (as evidenced by Fig. 7) in the same heat exchanger 304. By way of further example, the second channels 22 might be unchanged between Figs. 4 and 7, as is indicated at the numerals 22 and 322. That is, the cross-sectional area indicated at the numeral 96 in Fig. 4 and the cross-sectional area 396 indicated in Fig. 7 might demonstrate that the second channels remain unchanged in size and shape along the distance between Figs. 4 and 7 and have the same perimeter 62 and 362 along that part of their longitudinal extent, but that in the same distance between Figs. 4 and 7, the first channels may become relatively smaller. This might be done for any of a variety of reasons, such as the need to avoid thermal shock at the location represented by Fig. 7 or for other reasons. Such thermal shock potentially could be alleviated during startup of the heat exchanger 304 by reducing the relatively cooler flow through the first channels 320 and/or by providing a relatively greater wall thickness as is indicted at the numeral 392 between fluidly isolated channels that might have thermal shock therebetween at some point during the initial operation of the heat exchanger 304. For the same of completeness, it is noted that the relatively smaller first channels 320 in Fig. 7 result in an altered first distance 391 between horizontally adjacent (from the perspective of Fig. 7) first channels 320 that are in fluid communication with one another whereas the first distance 390 between horizontally adjacent second channels 322 is unchanged from the first distance 90 in Fig. 4.

While the first channels 320 remain in aligned first rows 370 and the second channels 322 remain in aligned second rows 372, this need not necessarily be the case in other embodiments. The adjacent relationships 378A and 378B between one of the first channels 320 and a pair of adjacent channels 320 that are in fluid communication therewith remain of approximately the same orientation, i.e., horizontal, as in Fig. 4 but the first channels 320 are of different distances from one another. The adjacent relationships between such a first channel 320 and the four diagonally adjacent second channels 322 that are fluidly isolated therefrom are indicated by the adjacent relationships 378C, 378D, 378E, and 378F, and these adjacent relationships are of roughly the same diagonal orientation as they were in Fig. 4, although the relative distances are likewise changed due to the smaller cross-sectional area 398 of the first channel 320. Further by way of example, it can be seen that the first channels 320 in Fig. 7 have a wall thickness 376A between them and the wall surface 368 of the wall 364 whereas the second channels 322 have a relatively greater wall thickness 376B between them and the wall surface 368.

It thus should be apparent that the various channels of the improved compact heat exchanger 304 and other heat exchangers that are described herein and variations thereof can have varying perimeters and cross-sectional areas that can change along their longitudinal lengths. Moreover, such heat exchangers could have three or more legs that are fluidly isolated from another but that are situated in heat transfer relation with each other in one fashion or another. It is also noted that the relative positions of the channels with respect to one another can likewise change along the longitudinal extent of the channels or otherwise. All such changes in the configurations of the channels as a function of position of the longitudinal extent of such channels is again one of a variety of optimization techniques that can be employed to achieve certain heat transfer properties and/or other properties related to the resistance to thermal and magnetic stresses and flow properties and other properties that can be achieved depending upon the needs of the particular application. Other variations will be apparent.

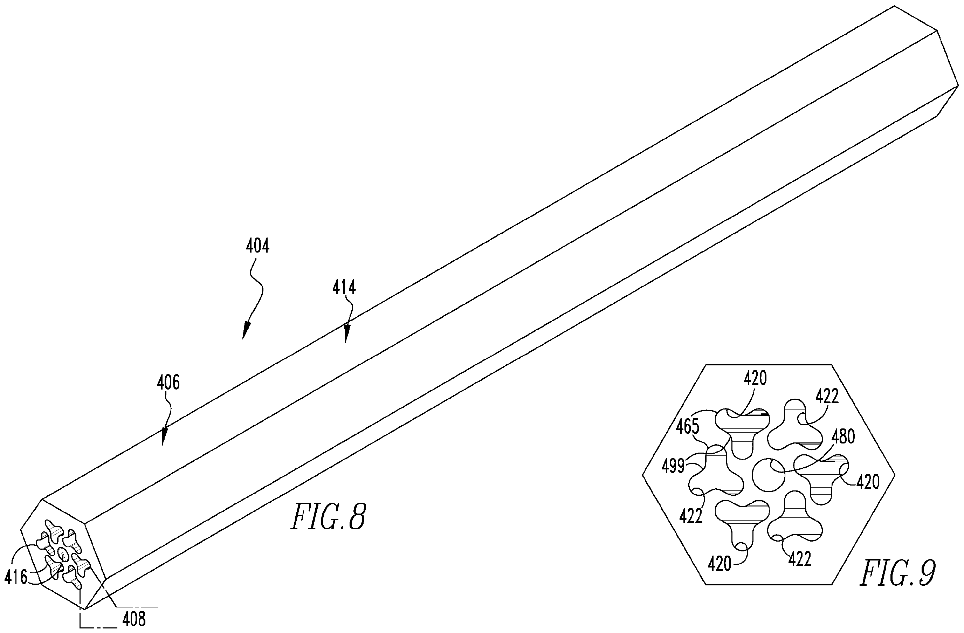

An improved compact heat exchanger 404 in accordance with a fifth embodiment of the disclosed and claimed concept is depicted in Figs. 8 and 9 as including a core 406 and as having a schematically depicted header apparatus 408 that may be similar to those mentioned hereinbefore. The core 406 includes a core body 414 having formed therein a plurality of channels 416 that include a plurality of first channels 420, a plurality of second channels 422, and an expansion channel 480.

The first and second channels 420 and 422 are alternately positioned about the circumference of the expansion channel 480. While the first channels 420 are in fluid communication with one another, and while the second channels 422 are likewise in fluid communication with one another, the first channels 420 are fluidly isolated from the second channels 422. Since the first and second channels 420 and 422 are alternately arranged with one another, the wall of the core 406 between each adjacent pair of first and second channels 420 and 422 is likely to experience significant thermal and mechanical stresses due to the temperature difference therebetween. The expansion channel 480 is fluidly isolated from both the first channels 420 and the second channels 422 and is provided in order to permit expansion of the core body 414 into the expansion channel 408 without significantly altering the fluid flow through the first and second channels 420 and 422.

It can be seen that the first and second channels 420 and 422 each are of a cross-sectional shape having a perimeter 465 that is of an arcuate shape that is non-oval and is non-circular and is different than the other perimeter shapes mentioned hereinbefore. Rather, the perimeter 465 is multi-lobed to provide a different type of optimization between heat transfer and pressure drop and/or is optimized for other considerations. The first and second channels 420 and 422 each have a cross-sectional area 499 that is equal to one another.

It thus can be seen that the expansion channel 480 can be provided to alleviate certain thermal or mechanical stresses in the heat exchanger 404 depending upon the needs of the particular application. The expansion channel 480 is formed in situ during the additive manufacturing process mentioned herein. Other expansion channels 480 of different sizes and/or shapes and/or positions can be provided in other embodiments without departing from the present concept.

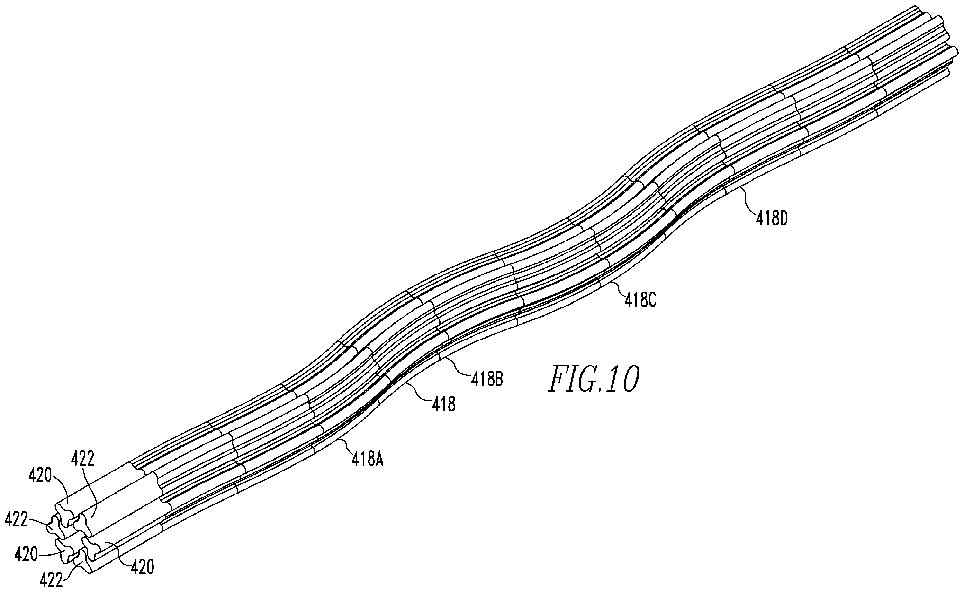

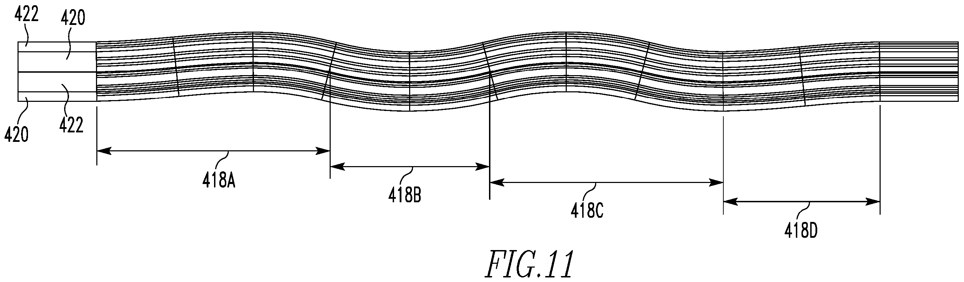

It is further noted that the first and second channels 420 and 422 are depicted by themselves, i.e., in the absence of the core 406, in Figs. 10 and 11. It can be seen from Figs. 10 and 11 that the first and second channels 420 and 422 are formed to have a number of undulations 418A, 418B, 418C, and 418D along their longitudinal extent. The undulations 418A, 418B, 418C, and 418D, which may be referred to collectively or individually herein with the numeral 418, are representative of a change in the direction of elongation of the first and second channels 420 and 422 that gradually occurs, for example, when travelling from the left toward the right or from the right toward the left in Fig. 11. Such undulations 418 can be of any of a variety of configurations and can be provided for reasons of optimization of heat transfer characteristics and/or for resolution of thermal and mechanical stresses, or for other reasons. Such undulations could be provided in any of the aforementioned heat exchangers that are described elsewhere herein as another way in which performance optimization can be achieved.

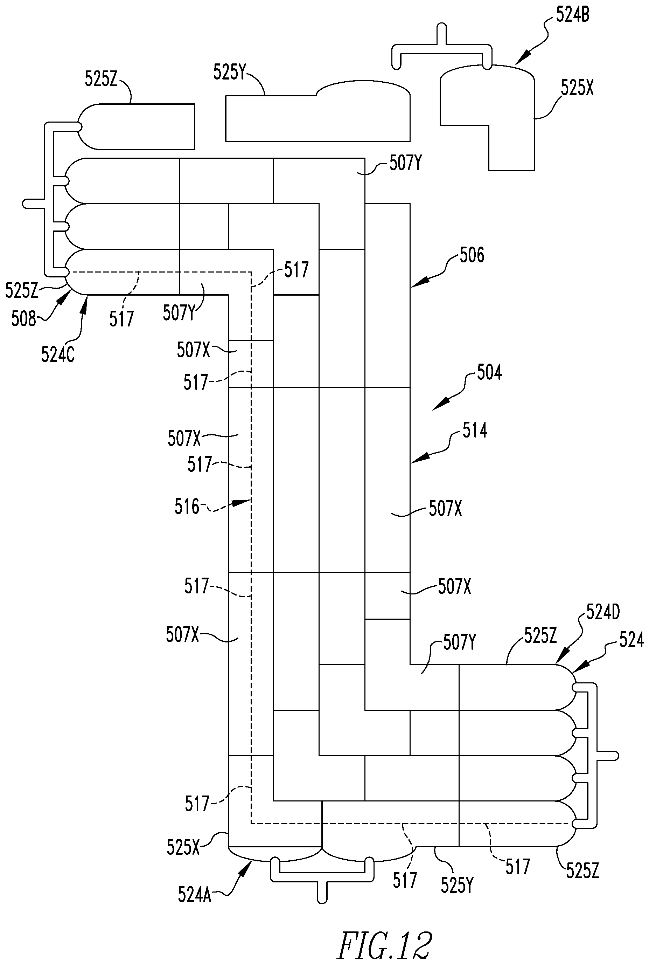

An improved compact heat exchanger 504 in accordance with a sixth embodiment of the disclosed and claimed concept is depicted generally in Fig. 12. The compact heat exchanger 504 includes a core 506 that includes a plurality of core portions 507X and 507Y that are connected together. In the depicted exemplary embodiment, the compact heat exchanger 504 further includes a header apparatus 508 that includes a plurality of header portions 525X, 525Y, and 525Z that are connected together and are connected with the core 506.

The compact heat exchanger 504 demonstrates how the cores 6 and the like that are presented elsewhere herein could be connected together to provide a much larger heat exchanger 504 than might be easily capable of manufacture using conventional equipment that performs the aforementioned additive manufacturing process. That is, additive manufacturing equipment that is available at any given time may be capable of producing components that are only of a limited size, and the heat exchanger 504 demonstrates how such components can be scaled to provide a relatively large heat exchanger 504 of a size that is suited to a particular application and that perhaps could not be manufactured during a single additive manufacturing operation.

The exemplary core portions 507X and 507Y are depicted as having relatively straight and elongated channel portions 517 (core portion 507X) or as having channel portions 517 that include one or more bends (core portion 507Y). Such channel portions 517 can be connected with one another end-to-end via sintering or other diffusion bonding operations as needed to provide desired comprehensive flow channels 516 that are formed from the various core portions 507X and 507Y. That is, the exemplary comprehensive channel 516 is depicted in Fig. 12 as including a plurality of channel portions 517 that are connected end-to-end to form the channel 516.

The header apparatus 508 includes a plurality of headers indicated at the numeral 524A, 524B, 524C, and 524D, which may be referred to collectively or individually herein with the numeral 524. The various headers 524 are formed of various combinations of the header portions 525X, 525Y, and 525Z as needed to achieve the desired performance characteristics that are suited to the application of the heat exchanger 504. It is expressly noted that the core 406 that is depicted in Figs. 8 and 9 or any of the other cores mentioned elsewhere herein or variations thereof could be employed as any one or more of the core portions 507X and 507Y that are schematically depicted in Fig. 12 depending upon the needs of the particular application. Moreover, any of the interrelationships between positions, sizes, shapes, and the like of the flow channels can be incorporated into the heat exchanger 504 as needed for optimization or for other reasons.

It thus can be seen that the various compact heat exchangers presented herein and the components thereof can have any of a wide variety of features and interrelationships among the various components thereof to provide needed optimization for various applications. Optimization can be provided on the basis of fluid flow performance and/or on the basis of heat transfer performance and/or on the basis of resistance to thermal and/or mechanical stresses, and/or according to other bases for optimization. Such optimization is highly cost effective given the additive manufacturing process described above. The various features and interrelationships that are described herein can be combined in any fashion without departing from the present concept.

While specific embodiments of the invention have been described in detail, it will be appreciated by those skilled in the art that various modifications and alternatives to those details could be developed in light of the overall teachings of the disclosure. Accordingly, the particular embodiments disclosed are meant to be illustrative only and not limiting as to the scope of the invention which is to be given the full breadth of the appended claims.

## Claims

1. A compact heat exchanger (4) comprising:
a plurality of layers (12A, 12B, 12C) affixed to one another and formed via additive manufacturing by placing successive layers of particles atop one another and selectively applying a form of concentrated energy to each layer of particles to fuse certain of the particles together and/or to another layer and together forming a core (6) and a header apparatus;
the core having formed therein a plurality of channels (16), the plurality of channels comprising a number of first channels (20) and a number of second channels (22), at least a portion of the number of first channels being positioned for being in heat transfer relation with at least a portion of the number of second channels;
the header apparatus comprising at least a first header (29A) that is in fluid communication with at least some of the channels of the plurality of channels;
the at least first header having a channel end (32A) and a connection end (36A), the channel end being situated adjacent the core and including a number of flow connections (44A) that are in direct fluid communication with the at least some of the channels, the connection end having an opening (40) that is structured to be connected in fluid communication with another flow structure, the at least one header comprising a flow passage (38A) that extends between the channel end and the connection end and that enables fluid communication between the number of flow connections and the opening; and **characterized in that**
at least one of the layers of the plurality of layers being a layer that comprises at least a portion of the core having formed therein at least a portion of a channel of the plurality of channels and that further comprises a portion of the at least first header that includes at least a portion of the opening and that has formed therein at least a portion of the flow passage;
wherein the at least first header comprises a number of flow directors (54, 56), and wherein the flow passage comprises a plurality of flow passage portions (46, 48, 50) that together extend between the opening and a corresponding channel of the at least some of the channels and that permit fluid flow therebetween, at least a first flow director of the number of flow directors being situated adjacent the core and between a pair of first channels of the number of first channels, the at least first flow director having an external surface (60), a portion of the external surface forming at least a part of a flow passage portion of the plurality of flow passage portions that is in fluid communication with a first channel of the pair of first channels.

2. The compact heat exchanger of Claim 1 wherein at least some of the channels of the plurality of channels each have an arcuate perimeter (62) that is of a shape that is non-circular.

3. The compact heat exchanger of Claim 2 wherein another channel that is situated adjacent a channel of the at least some of the channels has another arcuate perimeter (263) that is of another shape different than the shape.

4. The compact heat exchanger of Claim 1 wherein the number of first channels are in fluid communication with one another and wherein the number of second channels are in fluid communication with one another, the number of first channels being fluidly isolated from the number of second channels, and wherein at least one first channel of the number of first channels is situated adjacent at least three other first channels of the number of first channels and is further situated adjacent at least three second channels of the number of second channels.

5. The compact heat exchanger of Claim 1 wherein the core comprises a wall (64) having situated at a side thereof both a first channel of the number of first channels and a second channel of the number of second channels and having at another side thereof a wall surface (68) that faces generally away from the number of first channels and the number of second channels, the minimum thickness (76A) of the wall between the wall surface and the first channel being different than the minimum thickness (76B) of the wall between the wall surface and the second channel.

6. The compact heat exchanger of Claim 1 wherein the core comprises a plurality of core portions (507X, 507Y) affixed together, at least some of the core portions of the plurality of core portions each having formed therein a plurality of channel portions (517), the plurality of channels portions comprising a number of first channel portions and a number of second channel portions, a first channel portion of the number of first channel portions of each of a plurality quantity of the plurality of core portions being connected together end-to-end to form at least a portion of a first channel (516) of the number of first channels, a second channel portion of the number of second channel portions of each of the plurality quantity of the plurality of core portions being connected together end-to-end to form at least a portion of a second channel of the number of second channels.

7. The compact heat exchanger of Claim 1 wherein another portion of the external surface forms at least a part of another flow passage portion of the plurality of flow passage portions that is in direct fluid communication with another first channel of the pair of first channels.

8. The compact heat exchanger of Claim 1 wherein the at least first header is a first inlet header, and wherein the header apparatus further comprises a first outlet header (24B);
the first inlet header being in fluid communication with at least some of the number of first channels at an inlet end thereof;
the first outlet header being in fluid communication with the at least some of the number of first channels at an outlet end thereof; and
the at least one of the layers being a layer that comprises a portion of the core having formed therein at least a portion of a first channel of the number of first channels, and that further comprises a portion of the first inlet header and a portion of the first outlet header in fluid communication with the at least portion of the first channel.

9. The compact heat exchanger of Claim 8 wherein the header apparatus further comprises a second inlet header (24C) and a second outlet header (24D), the second inlet header being in fluid communication with at least some of the number of second channels at an inlet end thereof, and the second outlet header being in fluid communication with the at least some of the number of second channels at an outlet end thereof.

10. The compact heat exchanger of Claim 1 wherein at least some of the channels of the plurality of channels are elongated along a direction of elongation and include a number of undulations (41B) along the direction ofelongation.

11. The compact heat exchanger of Claim 1 wherein the core comprises a wall (64) that is situated between a pair of adjacent channels of the plurality of channels, wherein the wall is of a thickness at a location on the core whereby the pair of adjacent channels are separated apart by a distance (92) that is equal to the thickness, and wherein the wall is of another thickness at another location on the core spaced from the location whereby the pair of adjacent channels are separated apart by another distance (392) that is equal to the another thickness, the thickness and the another thickness being unequal.

12. The compact heat exchanger of Claim I wherein the number of first channels are in fluid communication with one another, wherein the number of second channels are in fluid communication with one another, and wherein the plurality of channels further comprises a number of additional channels (80, 480) that are fluidly isolated from the number of first channels and that are fluidly isolated from the number of second channels.

13. The compact heat exchanger of Claim 12 wherein the number of additional channels comprise an additional channel (80, 480) that is situated adjacent at least one of a first channel of the number of first channels and a second channel of the number of second channels.

14. The compact heat exchanger of Claim 13 wherein the core has formed therein an opening (84) that extends between the additional channel and the exterior of the core.

15. The compact heat exchanger of Claim 13 wherein the additional channel (480) is situated adjacent a plurality of first channels of the number of first channels and is further situated adjacent a plurality of second channels of the number of second channels.

16. The compact heat exchanger of Claim 12 wherein the core further comprises a number of heaters (86) that are received in the number of additional channels and that are structured to be operable to preheat the compact heat exchanger.

## Patentansprüche

1. Kompakter Wärmetauscher (4), umfassend:
eine Vielzahl von Schichten (12A, 12B, 12C), die aneinander angebracht und durch additive Herstellung gebildet sind, indem mehrere aufeinander folgende Schichten von Partikeln übereinander platziert und selektiv eine Form von konzentrierter Energie auf jede Schicht von Partikeln angewendet wird, um bestimmte der Partikel miteinander und/oder mit einer weiteren Schicht zu verschmelzen, wobei die Schichten zusammen einen Kern (6) und eine Sammlervorrichtung bilden;
wobei der Kern darin eine Vielzahl von Kanälen (16) ausgebildet hat, wobei die Vielzahl von Kanälen eine Anzahl von ersten Kanälen (20) und eine Anzahl von zweiten Kanälen (22) umfasst, wobei zumindest ein Teil der Anzahl von ersten Kanälen positioniert ist, um in einer Wärme übertragenden Beziehung mit zumindest einem Teil der Anzahl von zweiten Kanälen zu stehen;
wobei die Sammlervorrichtung zumindest einen ersten Sammler (29A) umfasst, der in Fluidverbindung mit zumindest einigen der Kanäle der Vielzahl von Kanälen steht;
wobei der zumindest eine erste Sammler ein Kanalende (32A) und ein Anschlussende (36A) aufweist, wobei sich das Kanalende benachbart zu dem Kern befindet und eine Anzahl von Strömungsverbindungen (44A) beinhaltet, die in direkter Fluidverbindung mit den zumindest einigen der Kanäle stehen, wobei das Anschlussende eine Öffnung (40) aufweist, die dazu aufgebaut ist, in Fluidverbindung mit einer weiteren Strömungsstruktur verbunden zu werden, wobei der zumindest eine Sammler einen Strömungsdurchgang (38A) umfasst, der sich zwischen dem Kanalende und dem Anschlussende erstreckt und die Fluidverbindung zwischen der Anzahl von Strömungsverbindungen und der Öffnung ermöglicht; und **dadurch gekennzeichnet, dass**
zumindest eine der Schichten der Vielzahl von Schichten eine Schicht ist, die zumindest einen Abschnitt des Kerns umfasst, der darin zumindest einen Abschnitt eines Kanals der Vielzahl von Kanälen ausgebildet hat, und die ferner einen Abschnitt des zumindest einen ersten Sammlers umfasst, der zumindest einen Abschnitt der Öffnung beinhaltet und der darin zumindest einen Abschnitt des Strömungsdurchgangs ausgebildet hat;
wobei der zumindest eine erste Sammler eine Anzahl von Strömungsleitvorrichtungen (54, 56) umfasst, und wobei der Strömungsdurchgang eine Vielzahl von Strömungsdurchgangsabschnitten (46, 48, 50) umfasst, die sich zusammen zwischen der Öffnung und einem entsprechenden Kanal der zumindest einigen der Kanäle erstrecken und die eine Fluidströmung dazwischen ermöglichen, wobei zumindest eine erste Strömungslenkvorrichtung der Anzahl von Strömungslenkvorrichtungen sich benachbart zu dem Kern und zwischen einem Paar von ersten Kanälen der Anzahl von ersten Kanälen befinden, wobei die zumindest eine erste Strömungslenkvorrichtung eine äußere Oberfläche (60) aufweist, wobei ein Abschnitt der äußeren Oberfläche zumindest einen Teil eines Strömungsdurchgangsabschnitts der Vielzahl von Strömungsdurchgangsabschnitten bildet, die in Fluidverbindung mit einem ersten Kanal des Paars von ersten Kanälen steht.

2. Kompakter Wärmetauscher nach Anspruch 1, wobei zumindest einige der Kanäle der Vielzahl von Kanälen jeweils einen gekrümmten Umfang (62) aufweisen, der eine Gestalt aufweist, die nicht kreisförmig ist.

3. Kompakter Wärmetauscher nach Anspruch 2, wobei ein weiterer Kanal, der sich benachbart zu einem Kanal der zumindest einigen der Kanäle befindet, einen anderen gekrümmten Umfang (263) aufweist, der eine andere Gestalt aufweist, die sich von der Gestalt unterscheidet.

4. Kompakter Wärmetauscher nach Anspruch 1, wobei die Anzahl von ersten Kanälen untereinander in Fluidverbindung steht und wobei die Anzahl von zweiten Kanälen untereinander in Fluidverbindung steht, wobei die Anzahl von ersten Kanälen fluidmäßig von der Anzahl von zweiten Kanälen isoliert ist, und wobei zumindest ein erster Kanal der Anzahl von ersten Kanälen sich benachbart zu zumindest drei weiteren ersten Kanälen der Anzahl von ersten Kanälen befindet und sich ferner benachbart zu zumindest drei zweiten Kanälen der Anzahl von zweiten Kanälen befindet.

5. Kompakter Wärmetauscher nach Anspruch 1, wobei der Kern eine Wand (64) umfasst, an deren einer Seite sich sowohl ein erster Kanal der Anzahl von ersten Kanälen als auch ein zweiter Kanal der Anzahl von zweiten Kanälen befinden, und an deren anderer Seite sich eine Wandoberfläche (68) befindet, die allgemein von der Anzahl von ersten Kanälen und der Anzahl von zweiten Kanälen weg weist, wobei die minimale Dicke (76A) der Wand zwischen der Wandoberfläche und dem ersten Kanal sich von der minimalen Dicke (76B) der Wand zwischen der Wandoberfläche und dem zweiten Kanal unterscheidet.

6. Kompakter Wärmetauscher nach Anspruch 1, wobei der Kern eine Vielzahl von Kernabschnitten (507X, 507Y) umfasst, die aneinander angebracht sind, wobei zumindest einige der Kernabschnitte der Vielzahl von Kernabschnitten darin jeweils eine Vielzahl von Kanalabschnitten (517) ausgebildet haben, wobei die Vielzahl von Kanalabschnitten eine Anzahl von ersten Kanalabschnitten und eine Anzahl von zweiten Kanalabschnitten umfasst, wobei ein erster Kanalabschnitt der Anzahl von ersten Kanalabschnitten eines jeden einer Vielzahl/Menge der Vielzahl von Kernabschnitten untereinander Ende an Ende verbunden ist, um zumindest einen Abschnitt eines ersten Kanals (516) der Anzahl von ersten Kanälen zu bilden, wobei ein zweiter Kanalabschnitt der Anzahl von zweiten Kanalabschnitten eines jeden der Vielzahl/Menge der Vielzahl von Kernabschnitten untereinander Ende an Ende verbunden ist, um zumindest einen Abschnitt eines zweiten Kanals der Anzahl von zweiten Kanälen zu bilden.

7. Kompakter Wärmetauscher nach Anspruch 1, wobei ein weiterer Abschnitt der äußeren Oberfläche zumindest einen Teil eines weiteren Strömungsdurchgangsabschnitts der Vielzahl von Strömungsdurchgangsabschnitten bildet, der in direkter Fluidverbindung mit einem weiteren ersten Kanal des Paars von ersten Kanälen steht.

8. Kompakter Wärmetauscher nach Anspruch 1, wobei der zumindest eine erste Sammler ein erster Einlasssammler ist, und wobei die Sammlervorrichtung ferner einen ersten Auslasssammler (24B) umfasst;
wobei der erste Einlasssammler mit zumindest einigen der Anzahl von ersten Kanälen an einem Einlassende davon in Fluidverbindung steht;
wobei der erste Auslasssammler mit den zumindest einigen der Anzahl von ersten Kanälen an einem Auslassende davon in Fluidverbindung steht; und
wobei die zumindest eine der Schichten eine Schicht ist, die einen Abschnitt des Kerns umfasst, der darin zumindest einen Abschnitt eines ersten Kanals der Anzahl von ersten Kanälen ausgebildet hat, und die ferner einen Abschnitt des ersten Einlasssammlers und einen Abschnitt des ersten Auslasssammlers in Fluidverbindung zumindest mit dem Abschnitt des ersten Kanals umfasst.

9. Kompakter Wärmetauscher nach Anspruch 8, wobei die Sammlervorrichtung ferner einen zweiten Einlasssammler (24C) und einen zweiten Auslasssammler (24D) umfasst, wobei der zweite Einlasssammler mit zumindest einigen der Anzahl von zweiten Kanälen an einem Einlassende davon in Fluidverbindung steht, und der zweite Auslasssammler mit den zumindest einigen der Anzahl von zweiten Kanälen an einem Auslassende davon in Fluidverbindung steht.

10. Kompakter Wärmetauscher nach Anspruch 1, wobei zumindest einige der Kanäle der Vielzahl von Kanälen entlang einer Längsrichtung davon länglich sind und eine Anzahl von Wellen (41B) entlang der Längsrichtung aufweisen.

11. Kompakter Wärmetauscher nach Anspruch 1, wobei der Kern eine Wand (64) umfasst, die sich zwischen einem Paar von benachbarten Kanälen der Vielzahl von Kanälen befindet, wobei die Wand eine Dicke an einer Stelle an dem Kern aufweist, durch welche das Paar von benachbarten Kanälen durch einen Abstand (92) getrennt wird, der gleich der Dicke ist, und wobei die Wand an einer anderen Stelle an dem Kern, die von der ersten Stelle beabstandet ist, eine andere Dicke aufweist, durch welche das Paar von benachbarten Kanälen durch einen anderen Abstand (392) getrennt wird ist, der gleich der anderen Dicke ist, wobei die Dicke und die andere Dicke ungleich sind.

12. Kompakter Wärmetauscher nach Anspruch 1, wobei die Anzahl von ersten Kanälen untereinander in Fluidverbindung steht, wobei die Anzahl von zweiten Kanälen untereinander in Fluidverbindung steht, und wobei die Vielzahl von Kanälen ferner eine Anzahl von zusätzlichen Kanälen (80, 480) umfasst, die fluidmäßig von der Anzahl von ersten Kanälen isoliert sind und die fluidmäßig von der Anzahl von zweiten Kanälen isoliert sind.

13. Kompakter Wärmetauscher nach Anspruch 12, wobei die Anzahl von zusätzlichen Kanälen einen zusätzlichen Kanal (80, 480) umfasst, der sich benachbart zu zumindest einem von einem ersten Kanal der Anzahl von ersten Kanälen und einem zweiten Kanal der Anzahl von zweiten Kanälen befindet.

14. Kompakter Wärmetauscher nach Anspruch 13, wobei der Kern darin eine Öffnung (84) aufweist, die sich zwischen dem zusätzlichen Kanal und dem Äußeren des Kerns erstreckt.

15. Kompakter Wärmetauscher nach Anspruch 13, wobei der zusätzliche Kanal (480) sich benachbart zu einer Vielzahl von ersten Kanälen der Anzahl von ersten Kanälen befindet und sich ferner benachbart zu einer Vielzahl von zweiten Kanälen der Anzahl von zweiten Kanälen befindet.

16. Kompakter Wärmetauscher nach Anspruch 12, wobei der Kern ferner eine Reihe von Heizelementen (86) umfasst, die in der Anzahl von zusätzlichen Kanälen aufgenommen sind, und die dazu aufgebaut sind, um betätigt zu werden, um den Wärmetauscher vorzuwärmen.

## Revendications

1. Échangeur de chaleur (4) compact, comprenant :
une pluralité de couches (12A, 12B, 12C) affixées les unes aux autres et formées par fabrication additive, en plaçant des couches successives de particules les unes au-dessus les autres, et sélectivement appliquant une forme d'énergie concentrée à chaque couche de particules pour fusionner certaines des particules les unes aux autres et/ou à une autre couche, et ensemble formant un cœur (6) et un appareil collecteur ;
le cœur ayant formée à son intérieur une pluralité de canaux (16), la pluralité de canaux comprenant une série de premiers canaux (20) et une série de seconds canaux (22), au moins une partie de la série de premiers canaux étant positionnée pour être dans une relation de transfert de chaleur avec au moins une partie de la série de seconds canaux ;
l'appareil collecteur comprenant au moins un premier collecteur (29A) qui est en communication fluidique avec au moins certains des canaux de la pluralité de canaux ;
l'au moins premier collecteur ayant une extrémité de canal (32A) et une extrémité de connexion (36A), l'extrémité de canal étant située adjacente au cœur et comportant une série de connexions d'écoulement (44A) qui sont directement en communication fluidique avec les au moins certains des canaux, l'extrémité de connexion ayant une ouverture (40) qui est structurée pour être reliée en communication fluidique avec une autre structure d'écoulement, l'au moins un collecteur comprenant un passage d'écoulement (38A) qui s'étend entre l'extrémité de canal et l'extrémité de connexion et qui permet la communication fluidique entre la série de connexions d'écoulement et l'ouverture ; et **caractérisé en ce que**
au moins une des couches de la pluralité de couches étant une couche qui comprend au moins une portion du cœur, ayant formée à son intérieur au moins une portion d'un canal de la pluralité de canaux, et qui en outre comprend une portion de l'au moins premier collecteur qui comporte au moins une portion de l'ouverture et qui a formé à son intérieur au moins une portion du passage d'écoulement ;
dans lequel l'au moins premier collecteur comprend une série de directeurs d'écoulement (54, 56), et dans lequel le passage d'écoulement comprend une pluralité de portions de passage d'écoulement (46, 48, 50) qui s'étendent ensemble entre l'ouverture et un canal correspondant des au moins certains des canaux et qui permettent l'écoulement de fluide entre elles, au moins un premier directeur d'écoulement de la série de directeurs d'écoulement étant situé adjacent au cœur et entre une paire de premiers canaux de la série de premiers canaux, l'au moins premier directeur d'écoulement ayant une surface extérieure (60), une portion de la surface extérieure formant au moins une partie d'une portion de passage d'écoulement de la pluralité de portions de passage d'écoulement qui est en communication fluidique avec un premier canal de la paire de premiers canaux.

2. Échangeur de chaleur compact selon la revendication 1, dans lequel au moins certains des canaux de la pluralité de canaux respectivement ont un périmètre arqué (62) qui a une forme non-circulaire.

3. Échangeur de chaleur compact selon la revendication 2, dans lequel un autre canal qui est situé adjacent un canal des au moins certains des canaux a un autre périmètre arqué (263) qui a une autre forme qui est différente de la forme.

4. Échangeur de chaleur compact selon la revendication 1, dans lequel la série de premiers canaux est en communication fluidique entre elles et dans lequel la série de seconds canaux est en communication fluidique entre elles, la série de premiers canaux étant fluidiquement isolée de la série de seconds canaux, et dans lequel au moins un premier canal de la série de premiers canaux est situé adjacent à au moins trois autres premiers canaux de la série de premiers canaux, et est en outre situé adjacent à au moins trois seconds canaux de la série de seconds canaux.

5. Échangeur de chaleur compact selon la revendication 1, dans lequel le cœur comprend une paroi (64) ayant située à un côté tous les deux d'un premier canal de la série de premiers canaux et un second canal de la série de seconds canaux, et ayant, à un autre côté, une surface de paroi (68) généralement tournée à l'opposé de la série de premiers canaux et la série de seconds canaux, l'épaisseur minimale (76A) de la paroi entre la surface de paroi et le premier canal étant différente de l'épaisseur minimale (76B) de la paroi entre la surface de paroi et le second canal.

6. Échangeur de chaleur compact selon la revendication 1, dans lequel le cœur comprend une pluralité de portions de cœur (507X, 507Y) affixées les unes aux autres, au moins certaines des portions de cœur de la pluralité de portions de cœur respectivement ayant formées à leur intérieur une pluralité de portions de canal (517), la pluralité de portions de canaux comprenant une série de portions de premier canal et une série de portions de second canal, une première portion de canal de la série de premières portions de canal de chacune d'une pluralité / quantité de la pluralité de portions de cœur étant reliées entre elles bout à bout pour former au moins une portion d'un premier canal (516) de la série de premiers canaux, une seconde portion de canal de la série de secondes portions de canal de chacune de la pluralité / quantité de la pluralité de portions de cœur étant reliées entre elles bout à bout pour former au moins une portion d'un second canal de la série de seconds canaux,

7. Échangeur de chaleur compact selon la revendication 1, dans lequel une autre portion de la surface extérieure forme au moins une partie d'une autre portion de passage d'écoulement de la pluralité de portions de passage d'écoulement qui est directement en communication fluidique avec un autre premier canal de la paire de premiers canaux.

8. Échangeur de chaleur compact selon la revendication 1, dans lequel l'au moins premier collecteur est un premier collecteur d'entrée, et dans lequel l'appareil collecteur en outre comprend un premier collecteur de sortie (24B) ;
le premier collecteur d'entrée étant en communication fluidique avec au moins certains de la série de premiers canaux au niveau d'une extrémité d'entrée de ceux-ci ;
le premier collecteur de sortie étant en communication fluidique avec les au moins certains de la série de premiers canaux au niveau d'une extrémité de sortie de ceux-ci ; et
l'au moins une des couches étant une couche qui comprend une portion du cœur ayant formée à son intérieur au moins une portion d'un premier canal de la série de premiers canaux, et qui en outre comprend une portion du premier collecteur d'entrée et une portion du premier collecteur de sortie en communication fluidique avec au moins la portion du premier canal.

9. Échangeur de chaleur compact selon la revendication 8, dans lequel l'appareil collecteur en outre comprend un second collecteur d'entrée (24C) et un second collecteur de sortie (24D), le second collecteur d'entrée étant en communication fluidique avec au moins certains de la série de seconds canaux au niveau d'une extrémité d'entrée de ceux-ci, et le second collecteur de sortie étant en communication fluidique avec les au moins certains de la série de seconds canaux au niveau d'une extrémité de sortie de ceux-ci.

10. Échangeur de chaleur compact selon la revendication 1, dans lequel au moins certains des canaux de la pluralité de canaux sont allongés le long d'une direction d'allongement, et comportent une série d'ondulations (41B) le long de la direction d'allongement.

11. Échangeur de chaleur compact selon la revendication 1, dans lequel le cœur comprend une paroi (64) qui est située entre une paire de canaux adjacents de la pluralité de canaux, dans lequel la paroi a une épaisseur au niveau d'un emplacement sur le cœur, où la paire de canaux adjacents est séparée par une distance (92) qui est égale à l'épaisseur, et dans lequel la paroi a une autre épaisseur au niveau d'un autre emplacement sur le cœur, espacé de l'emplacement, où la paire des canaux adjacents est séparée par une autre distance (392) qui est égale à l'autre épaisseur, l'épaisseur et l'autre épaisseur n'étant pas égales.

12. Échangeur de chaleur compact selon la revendication 1, dans lequel la série de premiers canaux est en communication fluidique entre elles, dans lequel la série de seconds canaux est en communication fluidique entre elles, et dans lequel la pluralité de canaux en outre comprend une série de canaux additionnels (80, 480) qui sont fluidiquement isolés de la série de premiers canaux et qui sont fluidiquement isolés de la série de seconds canaux.

13. Échangeur de chaleur compact selon la revendication 12, dans lequel la série de canaux additionnels comprend un canal additionnel (80, 480) qui est situé adjacent à au moins un d'un premier canal de la série de premiers canaux et un second canal de la série de seconds canaux.

14. Échangeur de chaleur compact selon la revendication 13, dans lequel le cœur a formé à son intérieur une ouverture (84) qui s'étend entre le canal additionnel et l'extérieur du cœur.

15. Échangeur de chaleur compact selon la revendication 13, dans lequel le canal additionnel (480) est situé adjacent à une pluralité de premiers canaux de la série de premiers canaux, et est en outre situé adjacent à une pluralité de seconds canaux de la série de seconds canaux.

16. Échangeur de chaleur compact selon la revendication 12, dans lequel le cœur en outre comprend une série de réchauffeurs (86) qui sont reçus dans la série de canaux additionnels et qui sont structurés pour être opérables afin de préchauffer l'échangeur de chaleur compact.
